# EUROPEAN PATENT APPLICATION

(11) **EP 3 070 313 A1**
(43) Date of publication of application: **21.09.2016**
(21) Application number: 15160119.2
(22) Date of filing: 20.03.2015
(51) Int. Cl.: F02K 3/06, F02C 7/25, F02C 7/045

(54) **FIREWALL ASSEMBLY FOR A WALL PORTION IN A TURBO ENGINE HAVING DIFFERENT MATERIAL LAYERS**

(71) Applicant: Rolls-Royce Deutschland Ltd & Co KG, 15827 Blankenfelde-Mahlow (DE)
(72) Inventor: Wells, Paul Julian, 12205 Berlin (DE)
(74) Representative: Maikowski & Ninnemann Patentanwälte Partnerschaft mbB

(57) **Abstract**

The invention relates to firewall layer arrangement for a wall in a turbo engine (T), the firewall layer arrangement comprising at least two types of different material layers (P1-P2; L1-L3), wherein a first layer type is provided and configured for improving a fire resistance of the firewall layer arrangement and a second layer type is provided and configured for improving the mechanical strength of the firewall layer arrangement. According to the invention, the at least one material layer (L1-L3) of the first layer type is separated from the at least one material layer (P1-P2) of the second layer type by at least one foam layer (1) sandwiched between the material layers (P1-P2; L1-L3) of the first and second layer type.

## Description

The present invention relates to a firewall layer arrangement for a turbine engine part according to the preamble of claim 1.

Firewall layer arrangement in turbo engine parts are quite well known. For example, the complete shell or at least specific wall portions of a bypass duct or a fan case in a turbofan engine are made by several material layers forming a firewall layer arrangement in order to ensure functionality or at least structural integrity of the turbofan engine even in the event of fire in its interior. Due to the firewall layer arrangement, the respective wall should withstand a fire within the turbo engine for a certain amount of time. Normally a firewall layer arrangement in a turbo engine comprises several carbon layers and in some cases at least one additional layer of ceramic fibre in order to provide for an adequate fire resistance as well as for a sufficient mechanical strength in operation of the turbo engine.

The different material layers of such an firewall layer arrangement typically are designed with regard to a pre-defined fire resistance, i.e., the thickness of the firewall layer arrangement mostly depends on its desired fire resistance. The requirements for the mechanical strength of the firewall layer arrangement are of secondary interest in this regard. Accordingly, a typical firewall layer arrangement for a turbo engine part is usually thicker than required with respect to the necessary mechanical strength. Conventional firewall layer arrangements are thus normally overdesigned for strength.

The object of the present invention thus is to improve a firewall layer arrangement for a turbo engine part in this regard, in particular to allow for a lighter structure to be produced at lower costs.

A solution to this object is provided by a firewall layer arrangement according to claim 1 as well as by a turbo engine part comprising such a firewall layer arrangement.

According to the invention, a firewall layer arrangement for a turbo engine part comprises at least two types of different material layers. A first layer type is provided and configured for improving a fire resistance of the firewall layer arrangement, whereas a second layer type is provided and configured for improving the mechanical strength of the firewall layer arrangement. The at least one material layer of the first layer type is separated from the at least one material layer of the second layer type by at least one foam layer sandwiched between the material layers of the first and second layer type. Accordingly, layers designed for fire resistance are decoupled from layers providing the required mechanical strength of the structure by a foam layer sandwiched between these layers. This results in a reduction in the numbers of material layers of the first and second type which are spatially separated and decoupled by the foam layer since they can be more easily adapted for their specific purposes.

In a preferred embodiment, carbon layers that react pressure loads are separated from carbon layers that resist an attack by fire by a - preferably relatively thin - layer of structural foam material. Layers of the first layer type (fire resistance layers) are therefore not under load in the case of a fire and remain sufficiently intact to protect the material layers of the second type (pressure-loaded layers).

In one embodiment, the at least one foam layer is sandwiched between a first layer laminate of at least two material layers of the first layer type and a second layer laminate of at least two material layers of the second layer type. The firewall layer arrangement may thus comprise a first layer structure with several fire resistance layers comprising carbon and/or ceramic fibres which provide for a relatively high fire resistance. This first layer structure is separated from a second layer structure by the at least one foam layer, the second layer structure, e.g., comprising several layers with pre-impregnated carbon fibres which are significantly less fire resistant but provide for a desired strength. The second layer structure ensures the ability of the respective turbo engine part to withstand certain stresses and strains providing for a desired tensile, compressive and/or impact strength.

Depending on the primary purpose of the material layers they may comprise carbon fibres, pre-impregnated fibres and/or ceramic fibres.

In one embodiment, the firewall layer arrangement additionally comprises at least one material layer of a further layer type provided and configured for absorbing sound. In this regard, the at least one material layer may be designed for absorbing sound via Helmholtz resonance. Given that the foam layer is to be considered a material layer of a third layer type for spatially separating the material layers of the first and second layer type, the firewall layer arrangement in this embodiment may comprises one (or more) layer(s) for absorbing sound of at least a fourth (and fifth) layer type. By several additional layers an acoustic liner may be defined having at least one honeycomb layer - thus a material layer of a fourth layer type - and at least one perforated facing layer - thus a material layer of a fifth layer type. Such a firewall layer arrangement would thus define a layer package or laminate in which an acoustic liner provides for an effective absorbing of sound, material layers of a first layer type provide for an adequate fire resistance and material layers of a second layer type, which are decoupled from the material layers of the first layer type by at least one foam layer, provide for a desired mechanical strength.

The at least one honeycomb layer and the at least one perforated facing layer which are provided for absorbing sound and thus preferably forming an acoustic liner, may be arranged in such a way that the at least one honeycomb layer is sandwiched between the at least one perforated facing layer and the at least one material layer of the first layer type. In a corresponding embodiment, the honeycomb layer is sandwiched between one perforated facing layer and a first laminate of material layers of a first layer type (fire resistance layers), the at least one foam layer being sandwiched between this first laminate and a second laminate of material layers of the second layer type (pressure-loaded layers). In one embodiment, the honeycomb layer may be sandwiched between the first laminate of fire resistance layers and a (third) laminate of several perforated facing layers.

The thickness of the at least one material layer of the further layer type, which is provided and configured for absorbing sound, is at least three, four or five times greater than the thickness of the foam layer. Accordingly, the at least one foam layer which separates the fire resistance layer(s) and the pressure-loaded layer(s) is relatively thin compared to the layer(s) which shall provide for an effective absorbing of sound.

The foam layer may also import stiffness to the firewall layer arrangement and thus may serve for the mounting of at least one separate component to the firewall layer arrangement or the turbo engine part having such a firewall layer arrangement. In this regard, in one embodiment an insert is provided for the fixture of a component to the firewall layer arrangement which insert is embedded in the foam layer. The - preferably metallic - insert is configured for fixing the component to the turbo engine part by threading a fastener into the insert. The insert itself may be arranged in a form-locked manner in a cut-out in the foam layer. Additionally or in the alternative, the insert may be bonded to at least one of the material layers of the first or second layer type abutting the foam layer. In one embodiment, the insert is bonded to an upper and lower material layer between which the foam layer is sandwiched and which abut the foam layer at an upper and at a lower side.

In combination with an acoustic liner as outlined above, the additional use of a foam layer for accommodating an insert for the fixture of a component to be mounted to the turbo engine part provides for additional advantages. So far, corresponding inserts are directly mounted to the acoustic liner, namely to the honeycomb layer. For securing the insert in a honeycomb layer at least some of the honeycomb cells are destroyed and filled with a potting compound or filler. Such a potting compound thus fills cut honeycomb cells. Due to the insert and the thus locally damaged honeycomb structure, the sound absorbing capability of the corresponding acoustic liner is reduced. By fitting the insert to the additionally provided foam layer, such a damage to a material layer provided and configured for absorbing sound may be avoided. The insert may be fixed within the firewall layer arrangement without reaching into a sound absorbing material layer and hence leaving the sound absorbing layer intact. A component may thus be mounted and fixed to the turbo engine part without reducing a acoustic liner area. An insert for fixing this component to the turbo engine part can be completely installed in the foam layer.

In case the foam layer is thinner than the acoustic liner - the depth of which is determined by acoustic properties - an additional reduction in weight of the structure may be achieved. The dimensions of the insert may be merely adapted to the thickness of the foam layer. For example, a less long but wider insert may be used compared to an installation of an insert in a sound absorbing layer, in particular in a honeycomb layer. Furthermore, less or even no adhesive or filler-potting compounds need to be used for securing the insert within the firewall layer arrangement. Consequently, an additional advantage can be achieved by the foam layer.

The foam layer implemented in a firewall layer arrangement according to the invention preferably comprises a relatively closed-cell structure so that its capability of uptaking a resin thus not exceed a predefined threshold value. In one embodiment, a threshold of a (surface) resin take-up or surface resin absorption of the foam material is below 100 g/m², in particular below 75 g/m² or in particular about 50 g/m².

In one embodiment, the material of the foam layer has a density according to ISO 845 in the range from 50 to 240 kg/m³, a tensile strength according to ISO 577-2 in the range from 1.5 to 13 MPa and/or a compressive strength according to ISO 844 in the range from 0.8 to 9.5 MPa.

As already outlined above, one aspect of the present invention is to provide a turbo engine part having a fire layer arrangement as in particular stated in claim 1. The turbo engine part may thus comprise an inner or outer wall portion having a firewall layer arrangement in which one (or more) fire resistance layer(s) are separated from one (or more) pressure-loaded layer(s) by at least one foam layer. One example for such a turbo engine part may be a fan case for a turbo engine.

A fan case of a turbofan engine may comprise a shell with a firewall layer arrangement according to the invention. Typically, such a firewall layer arrangement protects the relatively thick fan case construction from fire because a resin in a radially outer layer would otherwise continue to burn even after removal of an external fire source.

Another example for a turbo engine part according to the invention is duct for a turbo engine. For example, a bypass duct for a turbofan engine may be provided comprising a shell with a firewall layer arrangement according to the invention.

Another aspect of the present invention is a turbofan engine comprising at least one (inner or outer) wall which is at least partially made from a firewall layer arrangement according to the invention and/or comprising a corresponding turbo engine part like a fan case and/or a (bypass) duct.

Further advantages and features of the present invention will become apparent by the following description of exemplary embodiments illustrated in the accompanying figures.
- FIG 1: shows a cross-section of a turbofan engine according to the invention in which a fan case and/or a wall of a bypass duct comprises a firewall layer arrangement according to the invention;
- FIG 2: shows a layer construction of an exemplary embodiment of a firewall layer arrangement according to the invention;
- FIGs 3A-3B: show in different cross-sectional views a prior art firewall layer arrangement with a separate component fixed to it by means of an insert embedded in a honeycomb layer of the firewall layer arrangement;
- FIGs 4A-4B: show in different cross-sectional views a firewall layer arrangement with a component fixed to it according to the invention.

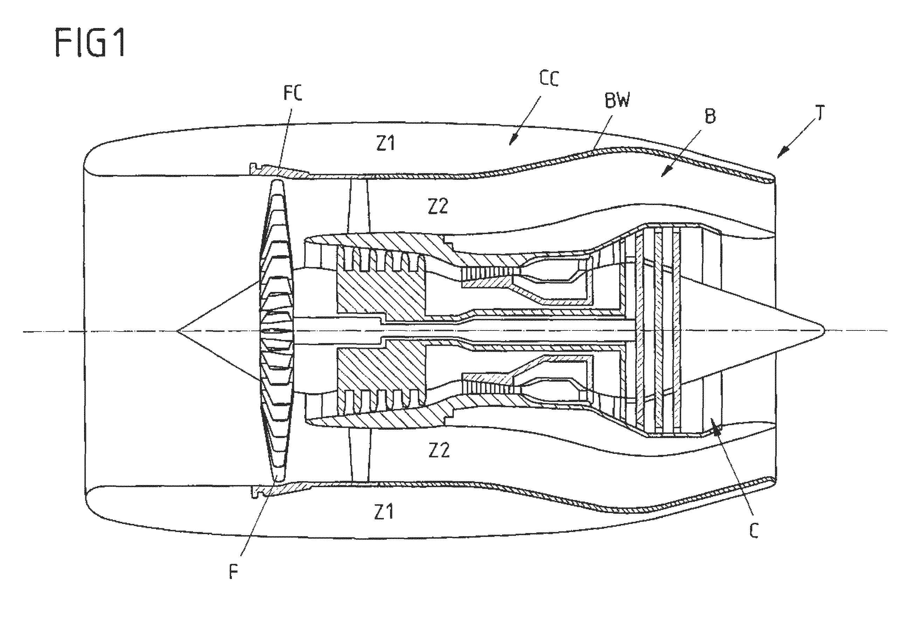

FIG 1 shows a turbofan engine T with its core C comprising the compressor stage and a combustion chamber. The core C is surrounded by a bypass duct B up-stream to which the fan F of the turbofan engine T is arranged. The fan F is housed in a fan casing FC. A bypass duct wall BW defines the bypass duct B and separates it from a cowl compartment CC in the nacelle of the turbofan engine T. The bypass duct B defines a second zone Z2 of the turbofan engine T which is separated from a first zone Z1 in the nacelle and in particular in the cowl compartment CC. Whereas in the second zone Z2 higher temperatures, typically above 100° Cduring operation of the turbofan engine T occur, the temperature in the first zone Z1 should be significantly smaller, since temperature sensitive electronic components are accommodated therein.

The fan casing FC and the bypass duct wall BW are respectively designed and configured for withstanding a fire within the turbofan engine T for a certain amount of time while also providing a sufficient mechanical strength in order to react in particular the pressure loads during normal operation of the turbofan engine T. In order to fulfil the thus differing requirements - fire resistance on the one hand and sufficient mechanical strength on the other hand - the fan casing FC as well as the bypass duct wall BW are typically manufactured by several layers of different materials. The wall for the bypass duct B as well as for the fan case FC thus comprises a layer construction in which several layers with a pre-impregnated carbon fibres and ceramic fibres are present. A typical bypass duct layer construction would, e.g., include five layers of pre-impregnated carbon fibres with an additional layer of ceramic fibre. Due to its fire resistance such a layer construction is called a firewall layer arrangement herein.

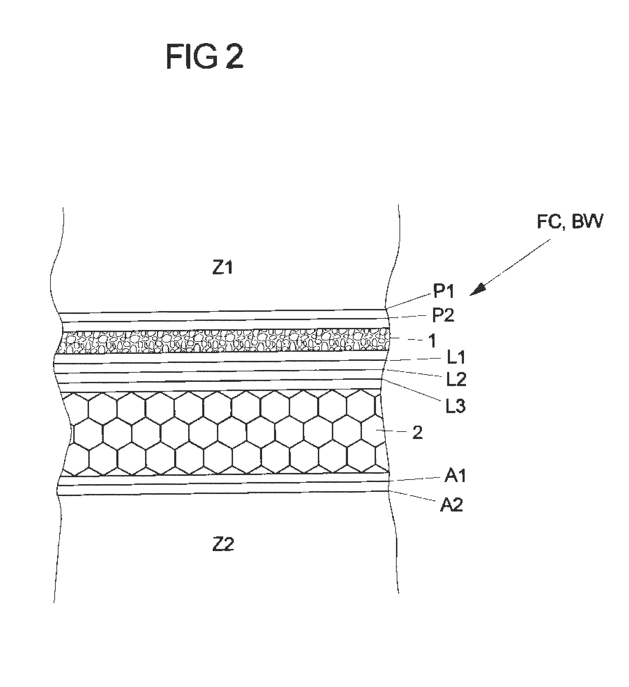

Whereas in conventional firewall layer arrangements for a turbofan engine T the material layers of different layer types are directly stacked one after the other, the present invention seeks to spatially separate material layers which are designed and provided for different purposes. In an exemplary firewall layer arrangement shown in FIG 2 a relative thin foam layer of a structural foam material is used to decouple a laminate of two pressure-loaded layers P1 and P2 from another laminate of three fire resistance layers L1, L2, L3. The pressure-loaded layers P1 and P2 define an outer surface of the firewall layer arrangement facing the first zone Z1. The fire resistance layers L1, L2, L3 are arranged radially inward so that in the event of a fire in the second zone Z2 they may resist the fire and are not under load. They thus remain sufficiently intact to protect the outer pressure-loaded layers P1 and P2 from the fire.

For sound absorbing, the firewall layer arrangement of FIG 2 furthermore comprises an acoustic liner composed of at least one honeycomb layer 2 and two (or more) perforated facing layers A1 and A2. The acoustic liner is arranged radially inward of the fire resistance layers L1, L2, L3 the perforated facing layers A1 and A2 defining an inner surface of the firewall layer arrangement facing the second zone Z2. The honeycomb layer 2 which allows for a sound absorbing via Helmholtz resonance is thus sandwiched between the three fire resistance layers L1, L2, L3 and the two perforated facing layers A1, A2.

The honeycomb layer 2 is about three to four times thicker than the foam layer 1. The thus relatively thin foam layer 1 separates the fire resistance layers L1, L2, L3 from the pressure-loaded layers P1, P2 and decouples them. Accordingly, the thickness and number of the pressure-loaded layers P1, P2 can be easily optimized, since there is no necessity for them to also offer a relatively high fire resistance. Both the fire resistance layers L1, L2, L3 and the pressure-loaded layers P1, P2 may nevertheless comprise carbon fibres or be made of carbon. At least oen of the fire resistance layers L1, L2, L3 comprises ceramic fibres. At least one of the pressure-loaded layers P1, P2 may comprise pre-impregnated carbon fibres and thus include a (greater) amount of resin which normally is to be avoided for a fire resistance layer due to the flammability of the resin.

The foam layer 1 preferably comprises a foam material exhibiting a resin take up of less than 75 g/m², a density according to ISO 845 above 50 kg/m³, a tensile strength according to ISO 577-2 above 1.2 MPa and a compressive strength according to ISO 844 above 0.8 MPa. A potential foam material is marketed, for example, under the name ROHACELL® by Evonik Industries AG, Germany.

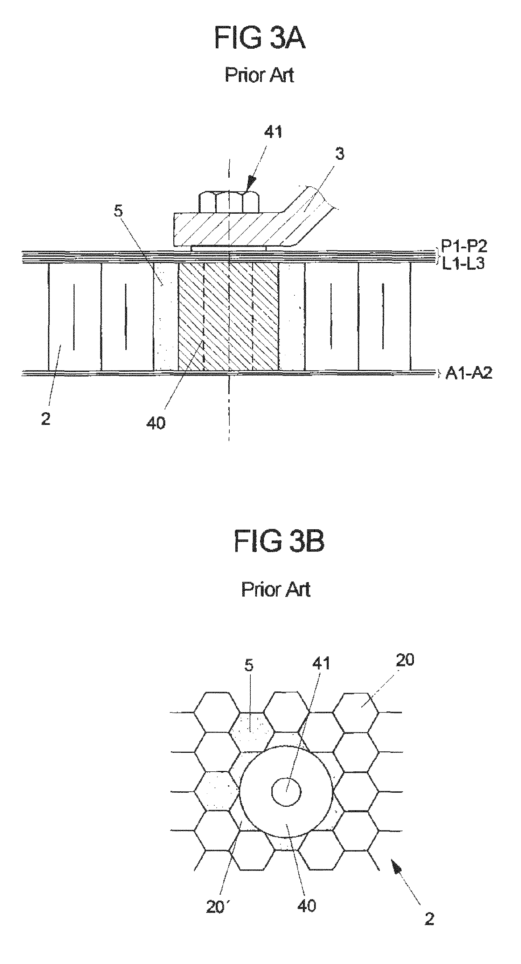

The foam layer 1 in a firewall layer assembly according to FIG 2 also provides for a space where an insert for fixing a component to the outer side of the respective wall portion can be installed without reducing the acoustic liner area. Whereas in prior art firewall layer arrangements according to FIGs 3A and 3B a typically metallic insert 40 for fixing a separate component or mounted unit 3 significantly damages the honeycomb layer 2 in the area of the insert 40, such may be avoided with the presence of the foam layer 1.

As illustrated in FIGs 3A and 3B, the honeycomb layer 2 in prior art firewall layer arrangements is sandwiched between the perforated facing layers A1, A2 and a laminate or layer package of the combined fire resistance and pressure-loaded layers L1-L3 and P1-P2. For fixing the mounting unit 3 to, e.g., a bypass duct wall BW defined by this firewall layer arrangement, the honeycomb layer 2 is cut so that the insert 40 may be accommodated therein. By cutting a space for the insert 40 into the honeycomb layer 2, several honeycomb cells confining the insert 40 are damaged so that a honeycomb structure 20 of the honeycomb layer 2 is no longer intact in an area around the insert 40. Furthermore, for securely holding the insert 40 in the honeycomb layer 2, a potting compound or filler 5 has to be used which fills the cut honeycomb cells of a thus impaired honeycomb structure 20'. In a prior art firewall layer arrangement, the area in the honeycomb layer 2 near the insert 40, which is bonded between the carbon layers A1-A2 and L1-L3, P1-P2 and into which a fastener 41 for fixing the mounting unit 3 to the firewall layer arrangement, is hence locally extensively altered which results in a significant loss in the sound absorbing capabilities in this area.

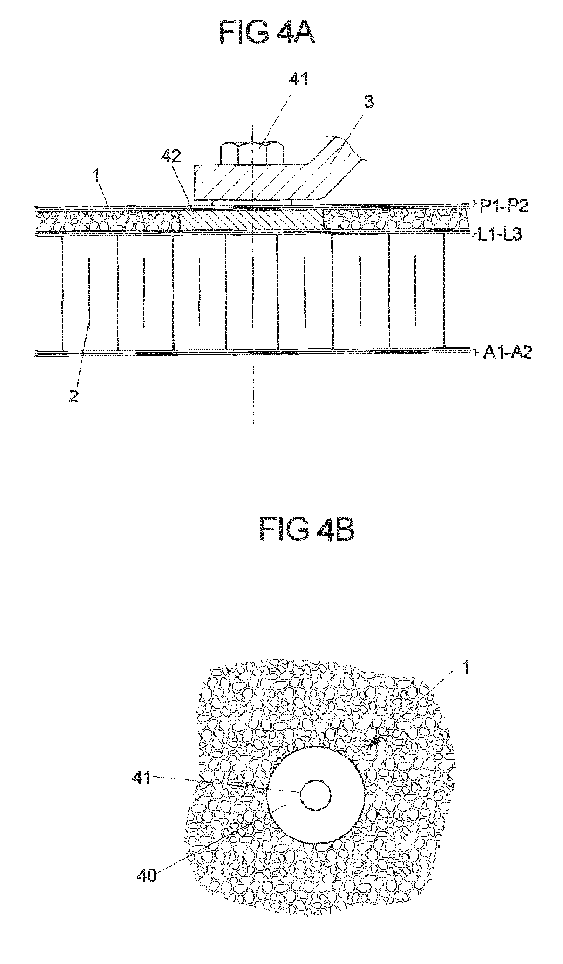

In an embodiment according to the invention which is shown in FIGs 4A and 4B, an insert 42 is completely accommodated in the foam layer 1 without reaching into the honeycomb layer 2 of the acoustic liner. The provision of the insert 42 for fixing the mounting unit 3 by means of a fastener 41 to it thus leaves the honeycomb layer 2 completely undamaged. The insert 42 is held in a form-locked manner in a cut-out in the foam layer 1 so that an additional potting compound or filler is also not necessary. The insert 42 is just fitted in the cut-out in the foam layer 1.

Since load from the insert 42 is transferred to the structure of the firewall layer arrangement at bond faces with the upper and lower layers P2 and L1 abutting the foam layer 1, the insert 42 is reliably secured in the relatively thin foam layer 1. Making the insert 42 longer so that it extends into the honeycomb layer 2 is thus not necessary. Depending on the loads expected to be acting on the insert, it is just sufficient to design the cut-out for the insert 42 and the insert 42 itself with a greater width so that a larger insert 42 extends in the foam layer 1. Since the foam layer 1 is thinner than the acoustic liner being composed of the honeycomb layer 2 and the perforated facing layers A1, A2, the weight of the insert 42 and an associated adhesive will still be less than in the prior art method for installing such an insert into the acoustic liner.

In summary, the present invention of a firewall layer arrangement which in the embodiment of FIG 1 is used to define a fan case FC and/or a bypass duct wall BW of a turbofan engine T allows for a better adaption of the different function layers, in particular, of fire resistance layers on the one hand and pressure-loaded layers on the other hand. Additionally it allows for a reduction in weight, lower manufacturing costs (due to the less material to be used) and an improved acoustic treatment when an acoustic liner is present.

### Reference list

- 1: foam layer
- 2: honeycomb layer
- 20, 20': honeycomb structure
- 3: mounted unit
- 40, 42: insert
- 41: fastener
- 5: jointing compound
- A1, A2: perforated facing layer
- B: bypass duct
- BW: bybass duct wall
- C: core
- CC: cowl compartment
- F: fan
- FC: fan case
- L1, L2, L3: fire resistance layer
- P1, P2: pressure-loaded layer
- T: turbofan engine
- Z1: first zone
- Z2: second zone

## Claims

1. Firewall layer arrangement for a turbo engine part, the firewall layer arrangement comprising at least two types of different material layers (P1-P2; L1-L3), wherein a first layer type is provided and configured for improving a fire resistance of the firewall layer arrangement and a second layer type is provided and configured for improving the mechanical strength of the firewall layer arrangement,
**characterized in that**
the at least one material layer (L1-L3) of the first layer type is separated from the at least one material layer (P1-P2) of the second layer type by at least one foam layer (1) sandwiched between the material layers (P1-P2; L1-L3) of the first and second layer type.

2. Firewall layer arrangement according to claim 1, wherein the at least one foam layer (1) is sandwiched between a first layer laminate of at least two material layers (L1-L3) of the first layer type and a second layer laminate of at least two material layers (P1-P2) of the second layer type.

3. Firewall layer arrangement according to claim 1 or 2, wherein at least one of the material layers (P1-P2, L1-L3) of the first or second type comprises carbon fibres, preimpregnated fibres and/or ceramic fibres.

4. Firewall layer arrangement according to one of claims 1 to 3, wherein the firewall layer arrangement additionally comprises at least one material layer (2; A1-A2) of a further layer type provided and configured for absorbing sound.

5. Firewall layer arrangement according to claim 4, wherein the least one material layer (2; A1-A2) is designed for absorbing sound via Helmholtz resonance.

6. Firewall layer arrangement according to claim 4 or 5, wherein at least one honeycomb layer (2) and at least one perforated facing layer (A1, A2) are provided for absorbing sound, the at least one honeycomb layer (2) being sandwiched between the least one perforated facing layer (A1, A2) and the at least one material layer (L1-L3) of the first layer type.

7. Firewall layer arrangement according to one of the claim 4 to 6, wherein the thickness of the at least one material layer (2) of the further layer type provided and configured for absorbing sound is at least three, four or five times greater than the thickness of the foam layer (1).

8. Firewall layer arrangement according to one of the preceding claims, wherein an insert (42) is embedded in the foam layer (1) for the fixture of a component (3).

9. Firewall layer arrangement according to claim 8, wherein the insert (42) is arranged in a form-locked manner in a cut-out in the foam layer (1).

10. Firewall layer arrangement according to claim 8 or 9, wherein the insert (42) is bonded to at least one of the material layers (L1, P2) of the first or second layer types abutting the foam layer (1).

11. Firewall layer arrangement according to one of the claims 4 to 7 and one of the claims 8 to 10, wherein the insert (42) is fixed within the firewall layer arrangement without reaching into the at least one material layer (2; A1-A2) of the further layer type provided and configured for absorbing sound.

12. Firewall layer arrangement according to one of the preceding claims, wherein the material of the foam layer (1) has a density according to ISO 845 in the range from 50 to 250 kg/m³, a tensile strength according to ISO 577-2 in the range from 1.5 to 13 MPa and/or a compressive strength according to ISO 844 in the range from 0.8 to 9.5 MPa.

13. Fan Case for a turbo engine (T) comprising a shell with a firewall layer arrangement according to one the preceding claims 1 to 12.

14. Duct for a turbo engine (T) comprising a shell with a firewall layer arrangement according to one the preceding claims 1 to 12.

15. Turbofan engine (T) comprising at least one wall which is at least partially made from a firewall layer arrangement according to one of the claims 1 to 12 and/or comprising a fan case and/or a duct according to claim 13 or 14.
